Europäisches Patentamt

European Patent Office

Office européen des brevets

(11) Numéro de publication: **0 329 572 B1**

# (12) FASCICULE DE BREVET EUROPEEN

(45) Date de publication de fascicule du brevet: **11.08.93** (51) Int. Cl.5: **G06F 7/52**, G06F 7/50

(21) Numéro de dépôt: **89420043.5**

(22) Date de dépôt: **13.02.89**

(54) **Multiplieur de nombres binaires à très grand nombre de bits.**

(30) Priorité: **15.02.88 FR 8802096**

(43) Date de publication de la demande:
**23.08.89 Bulletin 89/34**

(45) Mention de la délivrance du brevet:
**11.08.93 Bulletin 93/32**

(84) Etats contractants désignés:
**DE FR GB IT NL**

(56) Documents cités:
**US-A- 3 098 153**

**PATENT ABSTRACTS OF JAPAN, vol. 8, no. 133 (P-281)[1570], 20 juin 1984; & JP-A-59 35 236 (TOKYO SHIBAURA DENKI K.K.) 25-02-1984**

**ICASSP '86 PROCEEDINGS OF THE IEEE-IECEJ-ASJ INTERNATIONAL CONFERENCE ON ACOUSTICS, SPEECH, AND SIGNAL PROCESSING, Tokyo, vol. 3, 7-11 avril 1986, pages 2163-2166, IEEE; L. DE VOS et al.: "A fast adder-based multiplication unit for customised digital signal processors"**

(73) Titulaire: **FRANCE TELECOM**
**6, Place d'Alleray**
**F-75015 Paris(FR)**

(72) Inventeur: **Gallay, Philippe**
**Cidex 138-rue de la Cascade**
**Crolles F-38190 Brignoud(FR)**
Inventeur: **Depret, Eric**
**2, Résidence Saint Gerbold Rue Goustan Forger**
**F-14000 Caen(FR)**

(74) Mandataire: **de Beaumont, Michel**
**1bis, rue Champollion**
**F-38000 Grenoble (FR)**

## Description

La présente invention concerne des appareils de calcul numérique et plus particulièrement un multiplieur permettant d'effectuer des multiplications sur des nombres binaires à très grand nombre de bits.

On connaît dans la technique divers types de multiplieurs, mais ceux-ci sont généralement adaptés à effectuer des multiplications de nombres à 4, 8, 16 ou 32 bits. Si l'on cherche à utiliser de tels multiplieurs pour effectuer les calculs sur des nombres binaires ayant par exemple 256, 512 ou 1024 bits, on arrive à des temps de calcul très longs.

Ainsi, un objet de la présente invention est de prévoir un multiplieur permettant d'effectuer rapidement des multiplications de nombres binaires de très grande valeur, ce multiplieur présentant la caractéristique d'être rapide.

Un autre objet de la présente invention est de prévoir un tel multiplieur pouvant être intégré sur une puce unique comprenant de l'ordre de 100 000 composant s élémentaires, c'est-à-dire une dimension compatible avec les technologies existant à l'heure actuelle.

On notera que des multiplieurs utilisant des assemblages d'additionneur en blocs où le temps de propagation de retenue est statistiquement inférieur au temps de calcul sont connus du brevet US-A-3098153.

Pour atteindre cet objet, la présente invention prévoit un multiplieur de deux valeurs binaires X et Y à très grand nombre (q) de bits dans lequel il est prévu des mémoires stockant les nombres X et Y et un registre de résultat, X s'exprimant comme la séquence de bits $(x_{q-1} \ldots x_j \ldots x_0)$, ce multiplieur mettant en oeuvre l'algorithme consistant à effectuer séquentiellement de $j = q-1$ à $j = 0$ les additions $2R + x_jY$ et à placer à chaque fois le résultat dans le registre de résultat. Dans ce multiplieur, les additionneurs sont groupés en n blocs de m bits (avec n x m + 2q), m étant choisi pour que la durée de transfert de retenue dans un bloc soit inférieure à une période d'horloge, ledit multiplieur étant caractérisé en ce que

chaque bloc comprend une première et une deuxième ligne d'additionneurs élémentaires formant des cellules associées à chaque paire de bits à additionner,

les additionneurs élémentaires de la première ligne sont des additionneurs complets dont deux entrées reçoivent les bits à additionner et dont la troisième entrée reçoit le bit de retenue de la cellule précédente,

les additionneurs élémentaires de la première ligne sont des additionneurs complets dont deux entrées reçoivent les bits à additionner et dont la troisième entrée reçoit le bit de retenue de-l'additionneur de première ligne de la cellule précédente,

la première cellule d'un bloc, c'est-à-dire la cellule de plus faible poids comprend seulement l'additionnuer complet de la première ligne,

la deuxième cellule comprend en deuxième ligne un demi-additionneur recevant la sortie de poids faible de l'additionneur complet de la première ligne de cette deuxième cellule et un bit de retenue de poids faible du bloc précédent ;

la troisième cellule comprend en deuxième ligne un additionneur complet recevant la sortie de poids faible de l'additionneur complet de la première ligne de cette troisième cellule, un bit de retenue du demi-additionneur de deuxième ligne de la deuxième cellule et un bit de retenue de poids fort du bloc précédent,

les quatrième à m-ième cellules comprennent chacune en deuxième ligne un demi-additionneur ce dernier recevant la sortie de poids faible de l'additionneur complet de la première ligne de la même cellule et un bit de retenue de l'additionneur de deuxième ligne de la cellule précédente,

les sorties de poids faible de l'additionneur de la première cellule et des additionneurs de deuxième ligne des deuxième à m-ième cellules constituent les sorties de poids successivement croissant due bloc,

la $(m + 1)$-ième cellule de chaque bloc comprend un demi-additionneur recevant les bits de retenue des deux additionneurs de la m-ième cellule et fournissant leur somme à deux points mémoire qui mémorisent les retenues du bloc considéré,

les sorties de chaque bloc sont envoyées au registre de résultat, en parallèle.

Un avantage de l'organisation selon la présente invention est que chaque groupe d'additions élémentaires à l'intérieur de chaque bloc peut se faire en un cycle d'horloge. Il suffit en fin d'opération d'effectuer des reports de retenues pendant un nombre de cycles d'horloge égal au nombre n de blocs pour terminer le calcul, ce qui est beaucoup moins long que de faire le report de retenue à chaque calcul élémentaire puisque ceux-ci sont en nombre beaucoup plus grand que le nombre de blocs.

On montrera dans la description suivante que le multiplieur selon la présente invention peut être utilisé à de nombreuses fins autres que celles du calcul d'une simple multiplication étant donné que de nombreuses opérations, par exemple des exponentiations, se ramènent à des calculs successifs de multiplications.

On montrera également que ce multiplieur peut être utilisé dans le cadre d'un dispositif également réalisable sur une seule puce pour fournir un codeur/décodeur de données permettant de transmettre des données entre terminaux en évitant qu'un fraudeur puisse les décoder.

Ces objets, caractéristiques et avantages ainsi que d'autres de la présente invention seront exposés plus en détail dans la description suivante de modes de réalisation particuliers faite en relation avec les figures jointes parmi lesquelles :

la figure 1 représente de façon générale un multiplieur de l'art antérieur ;

la figure 2 représente de façon générale l'organisation choisie dans le multiplieur selon la présente invention ; et

la figure 3 représente de façon plus détaillée un bloc additionneur selon la présente invention.

Etant donné deux nombres X et Y pouvant s'exprimer sous forme d'une suite de q éléments binaires, $(x_{q-1} \ldots x_j \ldots x_0)$ et $(y_{q-1} \ldots y_j \ldots y_0)$, on choisit pour les multiplier l'algorithme consistant, pour chaque valeur $x_j$ à effectuer la séquence d'opérations $2R + x_jY$ où j correspond aux valeurs successives allant de q-1 à 0. A chaque opération, le résultat est placé dans un registre MR qui contient initialement la valeur 0 et le contenu du registre MR est réutilisé pour l'opération suivante. Avec cet algorithme, une multiplication est décomposée en q opérations dont chacune comprend un décalage vers la gauche du contenu du registre R pour obtenir 2R et une addition de cette valeur 2R à Y si $x_j = 1$ ou à 0 si $x_j = 0$.

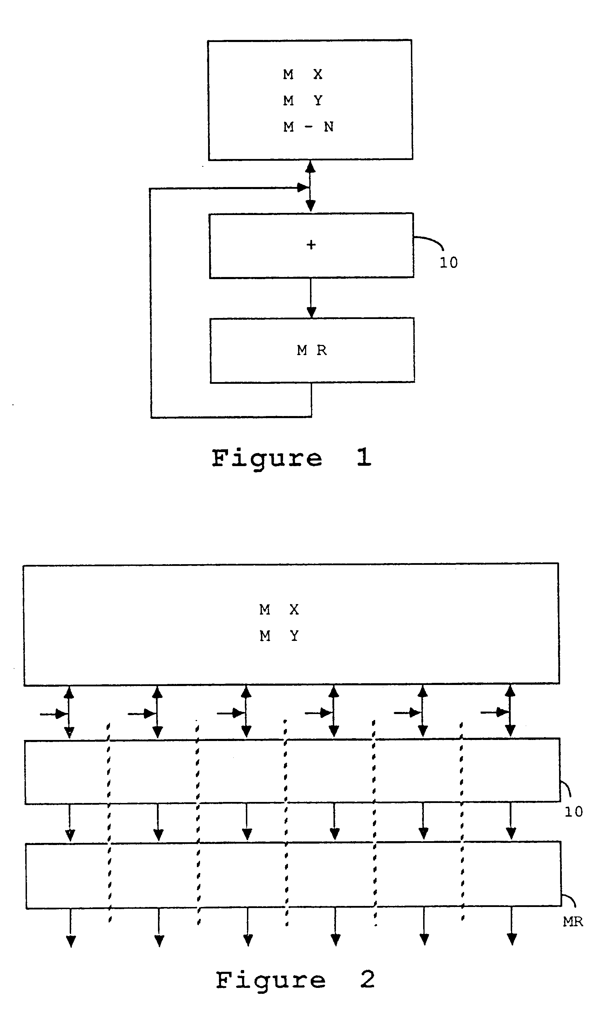

La figure 1 représente très schématiquement une structure permettant de réaliser cette opération. Etant donné une mémoire contenant des registres MX et MY, le contenu de cette mémoire est transféré dans un additionneur 10 où le contenu du registre MY est additionné à 2R. La sortie de l'additionneur est transférée au registre MR où toutes les valeurs intermédiaires du résultat R sont stockées successivement et remplacées par la valeur suivante. La sortie du registre MR décalée d'une unité pour fournir 2R est introduite dans la deuxième entrée des additionneurs du bloc 10.

De façon générale, un système de calcul du type de celui représenté en figure 1 est piloté par une horloge, par exemple une horloge dont la période est de 100 ns. L'additionneur 10 est constitué d'additionneurs élémentaires additionnant chacun 2 ou 3 bits d'entrée pour fournir deux bits de sortie : 1 bit de poids faible et 1 bit de retenue. Le transfert de retenue d'un additionneur au suivant se fait plus rapidement que la fréquence d'horloge, par exemple pour des technologies courantes actuelles en 4ns. Pour qu'une addition soit effectuée, il faut que le bit de retenue se soit propagé depuis la cellule la moins significative de l'additionneur jusqu'à la cellule la plus significative. D'autre part, en pratique, les systèmes de calcul informatiques sont basés sur des ensembles dont le nombre de cellules est un multiple de 2, par exemple 2, 4, 8, 16, 32, etc. Avec les valeurs numériques indiquées ci-dessus, on s'aperçoit que seules des opérations de 16 bits peuvent être effectuées à l'intérieur d'un cycle d'horloge (4 ns x 16 = 64ns, inférieur à 100 ns). Ainsi, si l'on veut par exemple effectuer des additions sur des opérandes à 32 bits, l'addition prendra deux cycles d'horloge pour être réalisée. Pur des opérandes à 256 bits, il faudrait donc 256/16 = 16 périodes d'horloge pour réaliser chaque addition élémentaire, ce qui, dans le cadre de l'algorithme précédent entraîne la nécessité de prévoir une durée totale de 16 x 256 périodes d'horloge puisque l'on répète l'opération pour chacun des bits du nombre X. Ainsi, la multiplication de deux opérandes de 256 bits prend une durée de 256 x 16 x 100 ns soit environ 0,4 ms.

La présente invention vise à utiliser une architecture de calculateur permettant de réduire considérablement cette durée de calcul. Pour ce faire, les additionneurs sont divisés en n blocs de m bits, avec n x m = 2q, par exemple de la façon représentée très schématiquement en figure 2. Le nombre m de bits de chacun des blocs est choisi de sorte que la durée de report de retenue à l'intérieur d'un bloc soit inférieure à la durée d'un coup d'horloge. Ainsi, en un coup d'horloge, chaque bloc a fourni un résultat de calcul et l'a transmis au registre MR associé. Pour que ce système fonctionne, il convient de sauvegarder la retenue fournie au niveau de chaque bloc puis de la transférer lors du coup d'horloge suivant. A la fin du traitement, il faudra faire un nombre de reports égal au nombre n de blocs pour obentir le résultat final.

Ainsi, pour des mots de 128 bits, on n'aura que 128 opérations initiales d'une durée d'une période d'horloge suivie de 16 opérations (16 blocs) pour les reports de retenues. On gagne donc pratiquement un facteur égal à 16 par rapport à la durée de traitement du système de base illustré en figure 1 (128 + 16 opérations au lieu de 128 X 16).

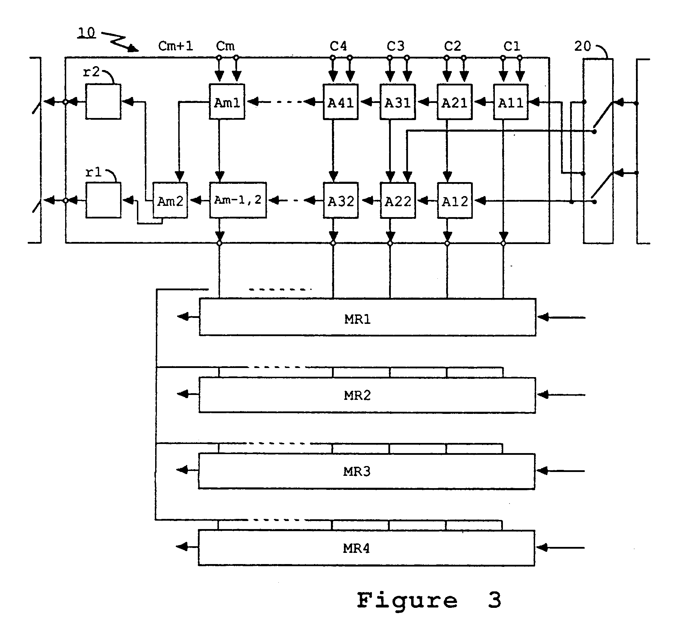

La présente invention vise plus particulièrement la réalisation de l'additionneur 10 pour satisfaire la fonction susmentionnée. L'architecture d'un bloc de l'additionneur 10 est représentée plus en détail en figure 3. Le bloc peut être considéré comme constitué de cellules d'additionneurs élémentaires $C_1$ à $C_{m+1}$. Les additionneurs sont répartis en deux lignes, une première ligne comprenant des additionneurs $A_{11}$ à $A_{m1}$ et une deuxième ligne comprenant des additionneurs $A_{12}$ à $A_{m2}$. Tous les additionneurs de la première ligne sont des additionneurs complets, c'est-à-dire des additionneurs à 3 entrée et 2 sorties. Les additionneurs de la deuxième ligne sont des demi-additionneurs, c'est-à-dire des additionneurs à 2 entrées et 2 sorties à l'exception de l'additionneur $A_{22}$ qui est un additionneur complet.

La première cellule $C_1$ comprend l'additionneur $A_{11}$, la deuxième cellule l'additionneur $A_{21}$ et l'ad-

ditionneur $A_{12}$, la m-ième cellule l'additionneur $A_{m1}$ et l'additionneur $A_{m-1,2}$ et la (m + 1)-ième cellule l'additionneur $A_{m2}$.

Dans les cellules $C_4$ à $C_{m-1}$, chaque additionneur de première ligne reçoit sur ses deux premières entrées les bits de poids appropriés à additionner et sur sa troisième entrée la sortie de l'additionneur précédent, et envoie sa sortie de poids fort vers la cellule suivante et son bit de poids faible vers l'additionneur de la deuxième ligne de la même cellule. Ce deuxième additionneur envoie son bit de poids faible vers la sortie correspondante en direction du registre MR, et son bit de poids fort vers l'additionneur suivant de la deuxième ligne.

Il convient d'analyser plus particulièrement la connexion des cellules initiales et finales qui, dans le cadre de la figure 3, sont spécifiquement connectées pour réaliser l'opération 2R + $x_j$Y en tenant compte de la retenue du bloc précédent.

L'additionneur $A_{11}$ de la cellule C1 a sa troisième entrée non-connectée. Il pourrait pour cette seule application être un demi-additionneur, mais comme on le verra ci-après, il est préférable de prévoir un additionneur complet pour permettre la réalisation d'opérations autres que l'opération particulière 2R + $x_j$Y.

La cellule $C_2$ est identique aux cellules $C_4$ à $C_{m-1}$, l'additionneur $A_{12}$ recevant le bit de poids faible de la retenue mémorisée lors du cycle antérieur par le bloc précédent.

Dans la cellule $C_3$ l'additionneur $A_{22}$ est un additionneur complet qui reçoit la sortie du bit de poids faible de l'additionneur $A_{31}$, la sortie du bit de poids fort de l'additionneur $A_{12}$, et la sortie de bit de poids fort mémorisée par le bloc précédent lors du cycle antérieur.

Dans la cellule $C_m$, les additionneurs $A_{m1}$ et $A_{m-1,2}$ fournissent tous deux à l'additionneur $A_{m2}$ de la cellule $C_{m+1}$ leur bit de poids fort, c'est-à-dire leurs bits de retenue qui sont sommés par l'additionneur $A_{m2}$, le résultat étant mémorisé dans des points mémoire r1 et r2 (r1 et r2 constituant un registre à 2 bits). Ce sont les sorties du registre r1-r2 du bloc précédent qui sont envoyées respectivement aux additionneurs $A_{12}$ et $A_{22}$ de la deuxième ligne du bloc considéré.

Comme cela a été exposé précédemment, les sorties de poids faible des cellules $C_1$ à $C_m$ sont fournies à un registre de résultat MR1.

On a représenté en figure 3 quatre registres de résultat MR1 à MR4. Ceci constitue un autre aspect particulier de l'organisation selon la présente invention. En effet, comme on le verra ci-après, si l'on ne veut pas dépasser sur une puce un nombre de composants élémentaires supérieur à environ 100000, il est difficile de réaliser des ensembles additionneurs à plus de 256 bits. On tourne la difficulté, selon un aspect de la présente invention, quand on veut réaliser des opérations sur des opérandes supérieurs à 128 bits, par exemple 256 ou 512 bits, en agissant séparément sur les parties de poids faible et de poids fort de ces opérandes. Dans le cas d'opérandes à 256 bits, on opérera séquentiellement en fournissant les sorties des additionneurs une fois dans le registre MR1 et une fois dans le registre MR2. Pour 512 bits, on opérera en 4 temps séquentiellement. Ainsi, selon cet aspect de la présente invention, une même puce peut servir à fournir des opérations sur des opérandes à nombre de bits élevé mais de 3 ordres de grandeur différents (les ordres de grandeur étant définis en binaire).

A titre d'exemple d'opérations plus complexes pouvant être réalisées par un opérateur selon la présente invention, cet opérateur peut être utilisé, pratiquement sans modification pour réaliser l'opération XYmodN au lieu de la simple multiplication XY. Pour cela, il suffit d'ajouter à l'algorithme précédent l'opération consistant à analyser à la suite de chaque opération élémentaire le bit de retenue du bloc de poids le plus élevé. Si ce bit est égal à 1, il convient d'intercaler l'opération consistant à placer dans le registre R la valeur R-N autant de fois que nécessaire. Pour ce faire, la valeur binaire -N est mémorisée dans la mémoire contenant déjà les registres MX et MY sous forme d'un registre M(-N) et l'on se sert de l'additionneur 10 pour effectuer quand il convient l'opération R + (-N). Quand on fait cette opération, il convient de modifier la façon dont s'effectue le transfert de retenue d'un bloc à l'autre, le transfert indiqué précédemment étant lié au fait que l'on additionnait à Y la valeur 2R, c'est-à-dire la valeur R décalée à gauche d'un bit. Dans le cas où l'on fait simplement R + (-N), il n'y a pas de décalage initial à faire et l'on introduit les bits de retenue d'un bloc antérieur au bloc suivant, directement vers les additionneurs $A_{11}$ et $A_{12}$ de ce bloc, l'additionneur $A_{11}$ recevant le bit de retenue de poids faible et l'additionneur $A_{12}$ le bit de retenue de poids fort. Pour cela, on prévoira un commutateur, désigné par la référence 20 en figure 3. Ce commutateur est représenté dans cette figure dans la position correspondant à l'opération 2R + Y. Il sera commuté vers l'autre position pour l'opération R + (-N).

En ce qui concerne la mémorisation de la valeur -N, on opérera comme cela est classique en calcul binaire en complément à 2 en mémorisant le nombre binaire dont chaque bit a été complémenté par rapport au nombre N avec addition d'une unité.

On notera que la présente invention est particulièrement intéressante dans le cas de ces multiplications modulo. En effet, dans ce cas le résultat aura le même nombre de bits que les opérandes, X, Y et N. En conséquence, les blocs seront alors

tels que m x n = q et non plus 2q, c'est-à-dire dans le cadre des exemples précédents que l'on fera des opérations sur des opérandes à 256, 512 et 1024 bits et non plus à 128, 256 et 512.

Bien entendu, la description qui précède s'adresse à l'homme de l'art du domaine des calculateurs, et de nombreux détails pratiques concernant la réalisation n'ont pas été décrits. En particulier, l'homme de l'art notera qu'il convient de prévoir notamment des entrées d'horloge, des séquenceurs, des systèmes d'adressage, et un registre de décalage pour obtenir la valeur R ou la valeur 2R.

On a vu précédemment comment l'opérateur selon la présente invention pouvait être utilisé pour effectuer les opérations XY ou XYmodN. Bien entendu, l'opérateur selon l'invention pourra également être utilisé pour réaliser des opérations plus complexes dont les algorithmes de résolution comprennent la réalisation des opérations susmentionnées. Par exemple, si l'on veut calculer l'expression $Y = X^S modN$, en exprimant S comme $(s_{k-1} \ldots s_i \ldots s_0)$, l'algorithme de calcul consiste, à partir d'une valeur initiale de Y, à effectuer pour chacune des valeurs de i allant de k-1 à 0 l'opération $Y = Y^2 modN$ si $s_i = 0$ et les opérations $Y = Y^2 modN$ et $Y = YXmodN$ si $s_i = 1$. On voit que ces opérations sont très simplement réalisées avec l'opérateur selon la présente invention. On notera que l'opération $Y = X^S modN$ est un type d'opération souvent utilisé dans les systèmes de codage d'informations destinés à éviter la fraude.

A titre d'exemple des résultats obtenus par un dispositif selon la présente invention, on notera que les inventeurs ont réalisé un opérateur permettant d'effectuer le calcul susmentionné ($Y = X^S modN$) fabriqué en technologie CMOS 2 microns comprenant 100400 transistors sur une puce de 88 mm². L'opération XYmodN était réalisé en interne en 0,3 ms dans le cas où les opérandes Y, X, et N étaient des mots de 512 bits. L'opération $X^S modN$ était réalisée en 70 ms, 320 ms et 1,5 s dans les cas où X, S et N étaient respectivement des mots de 256, 512 et 1024 bits. Dans le cas où X et N étaient des mots de 1024 bits et S était égal à 3, l'opération était réalisée en 3 ms, c'est-à-dire à un débit supérieur à environ 256 kilobits par seconde. Dans le cas où S était égal à 2 et où X et N étaient des mots de 1024 bits, l'opération $X^2 modN$ a été réalisée en 1,65 ms c'est-à-dire à un débit supérieur à 512 kilobits par seconde.

**Revendications**

1. Multiplieur de deux valeurs binaires X et Y à très grand nombre (q) de bits dans lequel il est prévu des mémoires (MX et MY) stockant les nombres X et Y et un registre de résultat (MR) stockant le résultat (R), X s'exprimant comme la séquence de bits $(x_{q-1} \ldots x_j \ldots x_0)$, ce multiplieur mettant en oeuvre l'algorithme consistant à effectuer séquentiellement de j = q-1 à j = 0 les additions $2R + x_jY$ et à placer à chaque fois le résultat dans le registre de résultat (MR), dans lequel les additionneurs sont groupés en n blocs de m bits, avec n x m = 2q, m étant choisi pour que la duée de propagation de retenue dans un bloc soit inférieure à une période d'horloge, caractérisée en ce que :

chaque bloc comprend une première et une deuxième ligne d'additionneurs élémentaires formant des cellules ($C_1$ à $C_{m+1}$) associées à chaque paire de bits à additionner,

les additionneurs élémentaires ($A_{11}$ à $A_{m1}$) de la première ligne sont des additionneurs complets dont deux entrées reçoivent les bits à additionner et dont la troisième entreé reçoit le bit de retenue de l'additionneur de première ligne de la cellule précédente,

la première cellule ($C_1$) d'un bloc, c'est-à-dire la cellule de plus faible poids comprend seulement l'additionneur complet ($A_{11}$) de la première ligne,

la deuxième cellule ($C_2$) comprend en deuxième ligne un demi-additionneur ($A_{12}$) recevant la sortie de poids faible de l'additionneur complet de la première ligne de cette deuxième cellule et un bit de retenue de poids faible du bloc précédent ;

la troisième cellule ($C_3$) comprend en deuxième ligne un additionneur complet ($A_{22}$) recevant la sortie de poids faible de l'additionneur complet de la première ligne de cette troisième cellule, un bit de retenue du demi-additionneur ($A_{12}$) de deuxième ligne de la deuxième cellule ($C_2$) et un bit de retenue de poids fort du bloc précédent,

les quatrième ($C_4$) à m-ième ($C_m$) cellules comprennent chacune en deuxième ligne un demi-additionneur ($A_{32}$ - $A_{m-1,2}$), ce dernier recevant la sortie de poids faible de l'additionneur complet de la première ligne de la même cellule et un bit de retenue de l'additionneur de deuxième ligne de la cellule précédente,

les sorties de poids faible de l'additionneur de la première cellule et des additionneurs de deuxième ligne des deuxième à m-ième cellules constituent les sorties de poids successivement croissant du bloc,

la (m+1)-ième cellule ($C_{m+1}$) de chaque bloc comprend seulement un demi-additionneur ($A_{m2}$) recevant les bits de retenue des deux additionneurs de la m-ième cellule et fournissant à deux points mémoire leur somme, pour constituer les bits de retenue de poids fort et de poids faible du bloc,

les sorties de chaque bloc sont envoyées au registre de résultat, en parallèle.

2. Multiplieur selon la revendication 1 adapté à la multiplication de nombres binaires de q à pq bits, caractérisé en ce qu'il comprend p registres de résultat (MR1-MR4) chargés séquentiellement par les blocs susmentionnés.

3. Multiplieur selon l'une des revendications 1 ou 2, permettant en outre de réaliser l'opération XYmodN dans lequel on réalise entre chaque opération élémentaire 2R + $x_j$Y une vérification du bit de débordement ($r_{ov}$) du bloc de poids le plus élevé et, si ce bit de débordement est égal à 1, on intercale autant de fois que nécessaire l'opération R-N, caractérisé en ce qu'il comprend en outre :

un registre de mémorisation de -N,

des moyens de commutation entre chaque bloc pour, quand on veut faire l'opération R + (-N), appliquer les bits de retenue de poids faible et de poids fort mémorisés dans les pointe mémoire d'un bloc, respectivement, aux premiers additionneurs des première et deuxième lignes du bloc suivant.

**Claims**

1. A multiplier for two binary values, X and Y, comprising a very large number (q) of bits, wherein memories (MX and MY) storing the numbers X and Y and a result register (MR) storing the result R are provided, X being expressed as a sequence of bits ($x_{q-1}$ ... $x_j$ ... $x_0$), said multiplier using the algorithm consisting in sequentially carrying out from j = q-1 to j = 0 the additions 2R + $x_j$Y and each time entering the result in said result register (MR), wherein the adders are grouped into n blocks of m bits (with n x m = 2q), m being chosen so that the carry transfer time into a block is shorter than a clock period, characterized in that:

. each block comprises a first and a second line of elementary adders forming cells ($C_1$ to $C_{m+1}$) associated with each pair of bits to be added,

. the elementary adders ($A_{11}$ to $A_{m1}$) of the first line are full adders, two inputs of which receive the bits to be added and the third input of which receives the carry bit of the preceding cell,

. the first cell ($C_1$) of a block, that is, the least significant cell, only comprises the full adder ($A_{11}$) of the first line,

. the second cell ($C_2$) comprises in the second line a half-adder ($A_{12}$) receiving the low order output from the full adder of the first line of this second cell and a low order carry bit from the preceding block,

. the third cell ($C_3$) comprises in the second line a full adder ($A_{22}$) receiving the low order output from the full adder of the first line of this third cell, a carry bit from the half-adder ($A_{12}$) of the second line of the second cell ($C_2$) and a high order carry bit of the preceding block,

. the fourth ($C_4$) to $m^{th}$ ($C_m$) cells comprise a half-adder ($A_{32}$ - $A_{m-1,2}$) in the second line, the latter receiving the low order output bit of the first line full adder of the same cell and a carry bit of the second line adder of the preceding cell,

. the lower order outputs from the adder of the first cell and from the second line adders of the second to $m^{th}$ cells form the outputs of the block having successive higher and higher weights,

. the (m+1)$^{th}$ cell ($C_{m+1}$) of each block comprises a half-adder ($A_{m2}$) receiving the carry bits of the two adders of the $m^{th}$ cell and supplying their sum to two memory points for constituting the high order and low order carry bits of the block,

. the outputs of each block are sent to the result register, in parallel.

2. A multiplier according to claim 1 adapted to the multiplication of binary numbers ranging from q to pq bits, characterized in that it comprises p result registers (MR1-MR4) sequentially loaded by the above-mentioned blocks.

3. A multiplier according to claim 1 or 2, further permitting to carry out the operation XYmodN, wherein, between each elementary operation 2R + $x_j$Y, the overflow bit ($r_{ov}$) of the most significant block is checked and, if said overflow bit is equal to 1, the operation R-N is inserted as many times as necessary, characterized in that it further comprises:

. a register memorizing -N,

. switching means between each block for applying the low and high order carry bits stored in the memory points of a block, respectively, to the first adders of the first and second lines of the following block, when it is desired to carry out the operation R + (-N).

**Patentansprüche**

1. Multiplizierer für zwei Binärzahlen X und Y mit sehr großer Bitzahl (q), mit Speichern (MX und MY) zum Speichern der Zahlen X und Y und mit einem Ergebnisregister (MR) zum Speichern des Ergebnisses (R), wobei X durch die Folge von Bits $(x_{q-1}... x_j ... x_0)$ ausgedrückt wird und der Multiplizierer den Algorithmus verwendet, sequentiell von $j = q-1$ bis $j = 0$ die Additionen $2R + x_jY$ auszuführen und jedes Mal das Ergebnis in das Ergebnisregister zu setzen, in dem Addierer in n Blöcken zu je m Bits mit $n \times m = 2q$ gruppiert sind und m so gewählt ist, daß die Übertragungszeit für das Speichern in einen Block kleiner als eine Taktperiode ist, dadurch gekennzeichnet, daß: jeder Block eine erste und eine zweite Reihe von elementaren Addierern aufweist, die Zellen ($C_1$ bis $C_{m+1}$) bilden, welche jeweils einem Paar von zu addierenden Bits zugeordnet sind, die elementaren Addierer ($A_{11}$ bis $A_{m1}$) der ersten Reihe Komplettaddierer sind, deren beiden Eingänge die zu addierenden Bits empfangen und dessen dritter Eingang das Speicherbit des Addierers der ersten Reihe der vorhergehenden Zelle empfängt,
die erste Zelle ($C_1$) eines Blockes, d.h. die Zelle mit dem niedrigsten Rang, lediglich den Komplettaddierer ($A_{11}$) der ersten Reihe enthält,
die zweite Zelle ($C_2$) in der zweiten Reihe einen Halbaddierer ($A_{12}$) enthält, der das niederrangige Ausgangssignal des Komplettaddierers in der ersten Reihe dieser zweiten Zelle und ein niederrangiges Speicherbit des vorhergehenden Blockes erhält;
die dritte Zelle ($C_3$) in der zweiten Reihe einen Komplettaddierer ($A_{22}$) enthält, der das niederrangige Ausgangssignal des Komplettaddierers der ersten Reihe dieser dritten Zelle, ferner ein Speicherbit des Halbaddierers ($A_{12}$) in der zweiten Reihe der zweiten Zelle ($C_2$) und ein höherrangiges Speicherbit des vorhergehenden Blockes erhält,
die vierte bis zur m-ten Zelle ($C_4$, $C_m$) jeweils in der zweiten Reihe einen Halbaddierer ($A_{32}$ bis $A_{m-1,2}$) enthalten, wobei letzterer das niederrangige Ausgangssignal des Komplettaddierers in der ersten Reihe der gleichen Zelle und ein Speicherbit des Addierers in der zweiten Reihe der vorhergehenden Zelle empfängt,
die niederrangigen Ausgangssignale des Addierers der ersten Zelle und der Addierer in der zweiten Reihe der zweiten bis m-ten Zelle Ausgangssignale mit von Block zu Block sukzessive wachsendem Rang bilden,
die (m + 1)-te Zelle ($C_{m+1}$) jedes Blockes lediglich einen Halbaddierer ($A_{m2}$) enthält, der die Speicherbits der beiden Addierer der m-ten Zelle empfängt und an zwei Speicherstellen ihre Summe liefert, um die höherrangigen und niederrangigen Speicherbits des Blockes zu bilden,
die Ausgänge jedes Blockes parallel zu dem Ergebnisregister geführt sind.

2. Multiplizierer nach Anspruch 1, der für die Multiplikation von binären Zahlen mit q bis pq Bits ausgelegt ist, dadurch gekennzeichnet, daß er p Ergebnisregister (MR1 bis MR4) aufweist, die durch die oben erwähnten Blöcke sequentiell geladen werden.

3. Multiplizierer nach einem der Ansprüche 1 bis 2, mit dem darüberhinaus die Operation XYmodN ausführbar ist, bei der zwischen jeder elementaren Operation $2R + x_jY$ ein Überlaufbit ($r_{ov}$) des Blockes mit dem höchsten Rang registriert wird und dann, wenn dieses Überlaufbit gleich 1 ist, so oft wie nötig die Operation R-N eingeschoben wird, gekennzeichnet durch die weiteren Merkmale:
ein Speicherregister von -N,
Schalteinrichtungen zwischen den einzelnen Blöcken, um dann, wenn die Operation R + (-N) ausgeführt werden soll, die niederrangigen und höherrangigen in den Speicherstellen eines Blocks gespeicherten Speicherbits den ersten Addierern der ersten bzw. zweiten Reihe des folgenden Blockes zuzuführen.

Figure 1

Figure 2

Figure 3